# NEUE EUROPÄISCHE PATENTSCHRIFT

(11) **EP 2 794 936 B2**
(45) Veröffentlichungstag und Bekanntmachung des Hinweises auf die Entscheidung über den Einspruch: **02.10.2019**
(45) Hinweis auf die Patenterteilung: 28.12.2016
(21) Anmeldenummer: 12770463.3
(22) Anmeldetag: 02.10.2012
(51) Int. Cl.: B32B 15/01, B65D 1/12, C21D 1/18, C21D 1/26, C21D 9/52, C22C 38/02, C22C 38/04, C22C 38/06, C22C 38/18, C21D 1/42, C21D 8/02, C21D 9/46, C22C 38/00, C23C 2/06, C23C 2/26, C23C 2/28, C23F 17/00, C22C 38/20, C22C 38/22, C22C 38/24

(54) **STAHLBLECH ZUR VERWENDUNG ALS VERPACKUNGSSTAHL SOWIE VERFAHREN ZUR HERSTELLUNG EINES VERPACKUNGSSTAHLS**
SHEET STEEL FOR USE AS PACKAGING STEEL AND METHOD FOR PRODUCING PACKAGING STEEL
TÔLE D'ACIER À UTILISER COMME ACIER D'EMBALLAGE AINSI QUE PROCÉDÉ DE FABRICATION D'UN ACIER D'EMBALLAGE

(30) Priorität: 22.12.2011 DE 102011056847
(43) Veröffentlichungstag der Anmeldung: 29.10.2014
(73) Patentinhaber: ThyssenKrupp Rasselstein GmbH, 56626 Andernach (DE)
(72) Erfinder: SAUER, Reiner, 56566 Heimbach-Weis (DE); KAUP, Burkhard, 56626 Andernach (DE); MATUSCH, Dirk, 56567 Neuwied (DE); NOUSKALIS, Dimitrios, 56659 Burgbrohl (DE)
(74) Vertreter: Charrier Rapp & Liebau
(86) Internationale Anmeldenummer: PCT/EP2012/069465
(87) Internationale Veröffentlichungsnummer: WO 2013/091923

(56) Entgegenhaltungen:
- EP-A1- 1 378 577
- WO-A1-2011/087107
- DE-A1- 1 483 247
- JP-A- 63 014 818
- US-A- 4 698 103
- US-B1- 6 638 380
- FURUNO Y ET AL: "Steel sheet for making easy-to-open can - is hot and cold worked then heat treated to obtain controlled amt. of martensite in structure", WPI / THOMSON,, Bd. 1987, Nr. 50, 9. November 1987 (1987-11-09), XP002689556,
- LUCAS ET AL: "Production of high quality formable grades in an ultra short annealing processing line", FINAL REPORT 2007", , XP055425358,
- CAHN R W; HAASEN P; KRAMER E J(EDITORS): "MATERIALS SCIENCE AND TECHNOLOGY", 1992 pages 1, 272/73-328/29 and 1264,

## Beschreibung

Die Erfindung betrifft ein Verfahren zur Herstellung eines Verpackungsstahls aus einem kaltgewalzten Stahlblech nach dem Oberbegriff des Anspruchs 1 sowie ein mit dem Verfahren hergestelltes Stahlblech zur Verwendung als Verpackungsstahl.

An die Eigenschaften von metallischen Materialien zur Herstellung von Verpackungen werden zunehmend höhere Anforderungen gestellt, insbesondere hinsichtlich ihrer Umformbarkeit und ihrer Festigkeit. Zwar sind aus dem Automobilbau sogenannte Dualphasenstähle bekannt, welche ein mehrphasiges Gefüge aufweisen, welches im Wesentlichen aus Martensit und Ferrit bzw. Bainit besteht, und welche einerseits über eine hohe Zugfestigkeit und andererseits auch über eine hohe Bruchdehnung verfügen. Ein solcher Dualphasenstahl mit einer Streckgrenze von mindestens 580 MPa und einer Bruchdehnung A₈₀ von mindestens 10% ist beispielsweise aus der WO 2009/021898 A1 bekannt. Aufgrund der Kombination der Materialeigenschaften solcher Dualphasenstähle mit einer hohen Festigkeit und einer guten Verformbarkeit eignen sich diese Dualphasenstähle insbesondere zur Herstellung von komplex geformten und hochbelastbaren Bauteilen, wie sie beispielsweise im Bereich des Karosseriebaus für Automobile benötigt werden.

Die Legierung der bekannten Dualphasenstähle setzt sich in der Regel aus einem Martensitanteil von 20% bis 70% und einem etwaigen Restaustenitanteil sowie Ferrit und/oder Bainit zusammen. Die gute Umformbarkeit von Dualphasenstählen wird durch eine relativ weiche Ferrit-Phase gewährleistet und die hohe Festigkeit wird durch die in einer Ferrit-Matrix eingebundenen festen Martensit- und Bainit-Phasen erzeugt. Die gewünschten Eigenschaften hinsichtlich Umformbarkeit und Festigkeit können bei Dualphasenstählen durch die Legierungszusammensetzung in weiten Bereichen gesteuert werden. So kann beispielsweise durch Zugabe von Silizium die Festigkeit durch Härtung des Ferrits bzw. Bainits erhöht werden. Durch Zugabe von Mangan kann die Martensitbildung positiv beeinflusst werden und es kann die Entstehung von Perlit verhindert werden. Auch die Zulegierung von Aluminium, Titan und Bor kann die Festigkeit erhöhen. Die Zulegierung von Aluminium wird zudem zur Desoxidation und zum Abbinden von ggf. in dem Stahl enthaltenem Stickstoff genutzt. Zur Ausbildung des mehrphasigen Legierungsgefüge werden Dualphasenstähle einer rekristallisierenden (bzw. austenitisierenden) Wärmebehandlung unterzogen, in der das Stahlband auf solche Temperaturen aufgeheizt und anschließend abgekühlt wird, dass sich die gewünschte mehrphasige Legierungsstruktur mit einer im Wesentlichen ferritisch-martensitischen Gefügeausbildung einstellt. Üblicherweise werden kaltgewalzte Stahlbänder aus wirtschaftlichen Gründen in einem Durchlaufglühverfahren im Glühofen rekristallisierend geglüht, wobei die Parameter des Glühofens, wie z. B. Durchlaufgeschwindigkeit, Glühtemperatur und Abkühlgeschwindigkeit, entsprechend dem geforderten Gefüge und den gewünschten Materialeigenschaften eingestellt werden.

Aus der DE 10 2006 054 300 A1 ist ein höherfester Dualphasenstahl sowie ein Verfahren zu dessen Herstellung bekannt, wobei in dem Herstellverfahren ein kalt- oder warmgewalztes Stahlband einer rekristallisierenden Durchlaufglühung in einem Durchlaufglühofen in einem Temperaturbereich von 820°C bis 1000°C unterzogen und das geglühte Stahlband anschließend von dieser Glühtemperatur mit einer Abkühlgeschwindigkeit zwischen 15 und 30 °C pro Sekunde abgekühlt wird.

Für die Verwendung als Verpackungsstahl eignen sich die aus dem Automobilbau bekannten Dualphasenstähle in der Regel nicht, weil diese insbesondere wegen der hohen Anteile von Legierungselementen wie Mangan, Silizium, Chrom und Aluminium sehr teuer sind und weil beispielsweise für die Verwendung von Verpackungsstahl im Lebensmittelbereich einige der bekannten Legierungselemente nicht verwendet werden dürfen, weil eine Verunreinigung der Lebensmittel durch Diffusion der Legierungsbestandteile in das Füllgut ausgeschlossen werden muss. Außerdem haben viele der bekannten Dualphasenstähle eine so hohe Festigkeit, dass sie mit den üblicherweise für die Herstellung von Verpackungsstahl verwendeten Anlagen nicht kaltgewalzt werden können.

Aus der DE 1483247-A sind hochfeste Stahlbleche zur Herstellung von Weißblech für Verpackungszwecke bekannt, welche aus einem unlegierten Stahl mit niedrigem Kohlenstoffgehalt gefertigt sind und ein Duplex-Mikrogefüge aufweisen, das im Wesentlichen aus Ferrit und Martensit besteht. Zur Herstellung dieser Stahlbleche wird ein reiner Kohlenstoffstahl oder ein unlegierter Stahl mit niedrigem Kohlenstoffgehalt in Form eines dünnen Blechs sehr schnell von einer Zwischentemperatur zwischen dem unteren A₁-Punkt und dem oberen A₃-Punkt mit einer Geschwindigkeit abgeschreckt, die über der kritischen Abkühlungsgeschwindigkeit liegt, so dass das gesamte Austenit in Martensit umgewandelt wird und dadurch ein Duplex-Gefüge entsteht. Die Stahlbleche weisen dabei Zugfestigkeiten von 620 bis 896 MPa und Bruchdehnungen von 2,5 bis 13 % auf.

Aus der US 4698103-A sind Dualphasen-Stahlbleche für Verpackungszwecke bekannt, welche aus einem unlegierten Stahl mit niedrigem Kohlenstoffgehalt und niedrigem Mangangehalt gefertigt sind. Zur Herstellung dieser Stahlbleche wird ein kaltgewalztes Stahlblech mit einder Dicke d zwischen 0,1 mm und 0,5 mm sowie einem Kohlenstoffgehalt zwischen 0,02 und 0,10 % und einem Mangangehalt von 0,15 bis 0,50 % auf Temperaturen im Al-A3-Bereich und unterhalb von 770°C erhitzt und schnell genug auf eine Temperatur von 300°C abgekühlt, so dass sich ein Mikrogefüge ausbildet, das Martensit und/oder Bainit enthält, wobei das Produkt P (in mm °C/s) aus Kühlrate V und der Dicke des Stahlblechs d im Bereich von 20 bis 900 und bevorzugt zwischen 75 und 500 liegt, um eine möglichst gute Ebenheit des Stahlblechs zu gewährleisten.

Die US 6638380 B1 offenbart ein Verfahren zur Herstellung von Stahlbändern mit niedrigem Kohlenstoff- und Mangangehalt für Tiefziehanwendungen, wobei ein warmgewalztes Stahlband kaltgewalzt und anschließend durch Erhitzen mittels Induktion bei Aufheizraten zwischen 150°C/s und 1000 °C/s auf Glühtemperaturen zwischen 650°C und 750°C für einen Zeitraum von 1 bis 20 Sekunden geglüht und danach mit Kühlraten von 100°C/s bis 500°C/s auf eine Überalterungstemperatur von 350°C bis 450°C abgekühlt und anschließend für 40 Sekunden bis 2 Minuten einem Überalterungsglühen bei der Überalterungstemperatur unterzogen wird.

Hiervon ausgehend, liegtder Erfindung die Aufgabe zugrunde, einen höherfesten Stahl mit guter Umformbarkeit für die Verwendung als Verpackungsstahl bereitzustellen, welcher möglichst kostengünstig zu produzieren ist. Ferner soll die Erfindung ein Verfahren zur Herstellung eines kostengünstig herstellbaren Verpackungsstahls mit hoher Festigkeit und hoher Bruchdehnung aufzeigen.

Diese Aufgaben werden mit einem Verfahren mit den Merkmalen des Anspruchs 1 gelöst. Bevorzugte Ausführungsbeispiele des Verfahrens sind in den abhängigen Ansprüchen aufgezeigt.

Das erfindungsgemäß hergestellte Stahlblech zur Verwendung als Verpackungsstahl wird aus einem niedriglegierten und kaltgewalzten Stahl mit einem Kohlenstoffgehalt von weniger als 0,1% hergestellt. Wenn im Folgenden von Stahlblech die Rede ist, wird darunter auch ein Stahlband verstanden. Das Stahlblech zeichnet sich neben dem niedrigen Kohlenstoffgehalt und den niedrigen Konzentrationen der weiteren Legierungsbestandteile durch ein mehrphasiges Gefüge aus, welches Ferrit und mindestens einen der Gefügebestandteile Martensit oder Bainit umfasst. Bei dem Stahl, aus dem das Stahlblech hergestellt wird, kann es sich um einen kaltgewalzten unlegierten oder niedriglegierten Stahl handeln. Als niedriglegiert werden Stähle bezeichnet, bei denen kein Legierungselement einen mittleren Gehalt von 5 Gew. % überschreitet. Der für die Herstellung des Stahlblechs verwendete Stahl weist insbesondere weniger als 0,5 Gew.-% und bevorzugt weniger als 0,4 Gew.% Mangan, weniger als 0,04 Gew.-% Silizium, weniger als 0,1 Gew.-% Aluminium und weniger als 0,1 Gew.-% Chrom auf. Der Stahl kann Legierungszusätze von Bor und/oder Niob und/oder Titan enthalten um die Festigkeit zu steigern, wobei die Zulegierung von Bor zweckmäßig im Bereich von 0,001-0,005 Gew.-% und die Zulegierung von Niob oder Titan im Bereich von 0,005-0,05 Gew.-% liegt. Bevorzugt werden dabei allerdings Gewichtsanteile für Nb < 0,03%.

Zur Ausbildung des mehrphasigen Legierungsgefüge wird der Stahl zur Herstellung des erfindungsgemäßen Stahlblechs zur Verwendung als Verpackungsstahl zunächst mittels elektromagnetischer Induktion rekristallisierend bei einer Aufheizrate zwischen 200 K/s und 1200 K/s geglüht und nach dem rekristallisierenden Induktionsglühen mit einer Kühlrate von mindestens 1000 K/s abgekühlt. Durch die rekristallisierende Wärmebehandlung (mit Tₘₐₓ > Acl, da ein Austenitisieren erforderlich ist) und anschließende rasche Abkühlung bildet sich das mehrphasige Gefüge aus, welches Ferrit und mindestens einen der Gefügebestandteile Martensit, Bainit und/oder Restaustenit umfasst. Das so behandelte Stahlblech weist eine Zugfestigkeit von mindestens 500 MPa und eine Bruchdehnung von mehr als 6% auf.

Als besonders wichtiger Parameter für die erfindungsgemäße Herstellung des Verpackungsstahls hat sich das rekristallisierende (bzw. austenitisierende) Glühen des Stahlblechs mittels elektromagnetischer Induktion erwiesen. Es wurde überraschend festgestellt, dass auf die Zulegierung von Legierungsbestandteilen, welche typischerweise in Dualphasenstählen enthalten sind, wie z. B. die Zulegierung von Mangan (welches typischerweise in den bekannten Dualphasenstählen einen Gewichtsanteil von 0,8-2,0 % hat), von Silizium (welches typischerweise in den bekannten Dualphasenstählen einen Gewichtsanteil von 0,1-0,5 % hat) und von Aluminium (welches in den bekannten Dualphasenstählen mit einem Gewichtsanteil von bis zu 0,2% zulegiert wird) verzichtet werden kann, wenn ein kaltgewalztes Stahlblech mit einem Kohlenstoffgehalt von weniger als 0,1 Gew.-% zunächst bei einer Aufheizrate von mehr als 75 K/s mittels elektromagnetischer Induktion rekristallisierend (bzw. austenitisierend) geglüht und anschließend mit einer hohen Kühlrate von wenigstens 100 K/s abgeschreckt wird.

Der überraschend beobachtete Einfluß der induktiven Erwärmung auf die Ausbildung und die Anordnung der Martensit-Phase in dem induktionsgeglühten Stahlband könnte wie folgt erklärt werden: Ferromagnetische Stoffe sind bei Abwesenheit eines äußeren Magnetfeldes nicht magnetisiert. Es gibt im Inneren dieser Stoffe jedoch Bereiche (Weiss-Bereiche), die auch bei Abwesenheit äußerer Magnetfelder bis zur Sättigung magnetisiert sind. Die Weiss-Bereiche werden durch Bloch-Wände getrennt. Durch Anlegen eines äußeren Magnetfeldes wachsen zunächst die günstig orientierten, also energetisch bevorzugten Weiss-Bereiche auf Kosten der Nachbarbezirke. Die Bloch-Wände verschieben sich dabei. Das Umklappen der Elektronenspins erfolgt dabei nicht gleichzeitig sondern die Spins wechseln ihre Richtung zuerst an den Grenzen der Weiss-Bereiche. Bei weiterer Feldsteigerung, wird die Richtung der Magnetisierung in die des Feldes gedreht, bis sie in allen Bereichen mit der des äußeren Magnetfeldes übereinstimmt und die Sättigung erreicht wird. Es ist außerdem bekannt, dass ein Magnetfeld die Bewegung von Versetzungen beeinflussen kann, ohne äußere anliegende mechanische Spannungen. Es erscheint nun plausibel, dass die Bloch-Wände bei ihrer Verschiebung Kohlenstoffatome und/oderVersetzungen mitnehmen. Dadurch sammeln sich Kohlenstoff und/oder Versetzungen in bestimmten Bereichen, in denen sich anschließend nach Glühung und Abschreckung Martensit bildet.

Zweckmäßig handelt es sich bei dem erfindungsgemäß hergestellten Stahlblech zur Verwendung als Verpackungsstahl um Fein- oder Feinstblech, das im Kaltwalzverfahren auf seine Enddicke gewalzt worden ist. Unter Feinblech wird dabei ein Blech mit einer Dicke von weniger als 3 mm verstanden und ein Feinstblech weist eine Dicke von weniger als 0,5 mm auf. Nach dem rekristallisierenden Glühen und dem Abkühlen kann das Stahlblech zur Erhöhung seiner Korrosionsbeständigkeit mit einer metallischen Oberflächenbeschichtung, beispielsweise aus Zinn, Chrom, Aluminium, Zink oder Zink/Nickel versehen werden. Hierfür bieten sich z.B. die bekannten elektrolytischen Beschichtungverfahren an.

Nachfolgend wird die Erfindung anhand eines Ausführungsbeispiels näher erläutert:
Zur Herstellung von Ausführungsbeispielen des erfindungsgemäß hergestellten Stahlblechs zur Verwendung als Verpackungsstahl wurden im Stranggießen gefertigte und warmgewalzte sowie auf Coils gewickelte Stahlbänder aus Stählen mit folgender Zusammensetzung verwendet:
- C: max. 0,1%;
- N: max. 0,02 %;
- Mn: max. 0,5 %, bevorzugt weniger als 0,4 %;
- Si: max. 0,04 %, bevorzugt weniger als 0,02 %;
- Al: max. 0,1 %, bevorzugt weniger als 0,05 %;
- Cr: max. 0,1 %, bevorzugt weniger als 0,05 %;
- P: max. 0,03 %;
- Cu: max. 0,1 %;
- Ni: max. 0,1 %;
- Sn: max. 0,04 %;
- Mo: max. 0,04 %;
- V: max. 0,04 %;
- Ti: max. 0,05 %, bevorzugt weniger als 0,02 %;
- Nb: max. 0,05 %, bevorzugt weniger als 0,02 %;
- B: max. 0,005 %
- und andere Legierungsbestandteile sowie Verunreinigungen: max. 0,05 %,
- Rest Eisen.

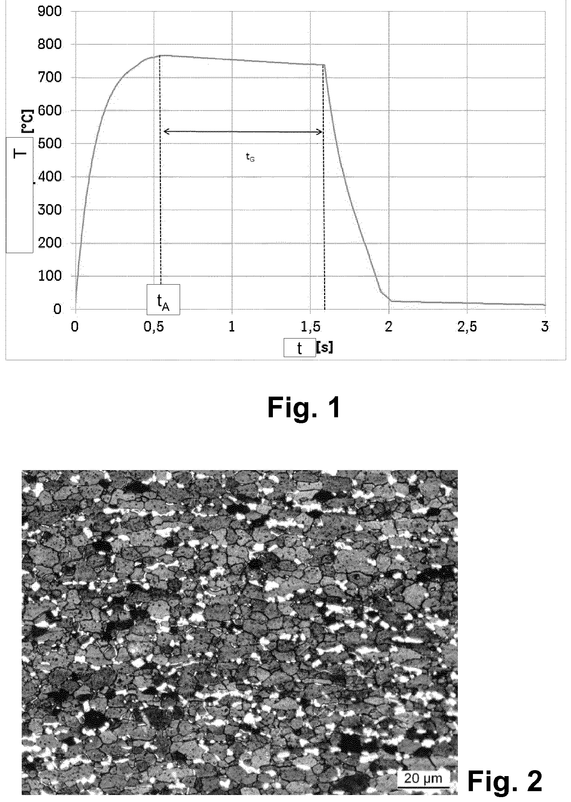

Dieses Stahlblech wurde zunächst unter einer Dickenreduktion von 50% bis 96% bis zu einer Enddicke im Bereich von ca. 0,5 mm kaltgewalzt und anschließend in einem Induktionsofen durch Induktionserwärmung rekristallisierend geglüht. Hierbei wurde bspw. für eine Probengröße von 20x30 eine Induktionsspule mit einer Leistung von 50kW bei einer Frequenz von f=200kHz verwendet. Die Glühkurve ist in **Figur 1** gezeigt. Wie der Glühkurve der Figur 1 zu entnehmen ist, wurde das Stahlband innerhalb einer sehr kurzen Aufheizzeit t_{A}, welche typischerweise zwischen ca. 0,5 s und 10 s liegt, auf eine Maximaltemperatur Tₘₐₓ oberhalb der A₁-Temperatur (T (A₁) ≈ 725°C) erhitzt. Die Maximaltemperatur Tₘₐₓ liegt unterhalb der Phasenübergangstemperatur T_{f} des ferromagnetischen Phasenübergangs (T_{f} ≈ 770°C). Die Temperatur des Stahlbands wurde dann über einen Glühzeitraum t_{G} von ca. 1 Sekunde auf einen Temperaturwert oberhalb der A₁-Temperatur aufrechterhalten. Während dieses Glühzeitraums t_{G} hat sich das Stahlband geringfügig von seiner Maximaltemperatur Tₘₐₓ von bspw. 750°C auf die A₁-Temperatur (ca. 725°C) abgekühlt. Danach wurde das Stahlband mittels einer Wasserkühlung innerhalb eines Abkühlinterwals von ca. 0,25 Sekunden auf Raumtemperatur (ca. 23°C) abgekühlt. Nach dem Abkühlen kann erforderlichenfalls noch ein weiterer Kaltwalzschritt mit einer Dickenreduktion von bis zu 40% erfolgen.

Das so behandelte Stahlblech wurde anschließend hinsichtlich seiner Festigkeit und seiner Bruchdehnung untersucht. Durch Vergleichsversuche konnte gezeigt werden, dass in allen Fällen die Bruchdehnung höher als 6% und in der Regel höher als 10% war und dass die Zugfestigkeit mindestens 500 MPa und in vielen Fällen sogar mehr als 650 MPa aufgewiesen hat.

Durch eine Farbniederschlagätzung nach Klemm konnte nachgewiesen werden, dass die erfindungsgemäß behandelten Stahlbleche ein Legierungsgefüge aufweisen, welches Ferrit als weiche Phase und Martensit sowie ggf. Bainit und/oder Restaustenit als harte Phase aufweist. In **Figur 2** ist ein Gefüge im Querschliff mit einer Farbniederschlagätzung nach Klemm dargestellt, wobei die dort weiß dargestellten Bereiche die Martensit-Phase und die blau bzw. braun dargestellten Bereiche die Ferrit-Phase zeigen. Es zeigt sich daraus eine zeilenförmige Anordnung der höherfesten Phase (Martensit/Bainit).

Durch Vergleichsversuche konnte ermittelt werden, dass die besten Ergebnisse hinsichtlich Festigkeit um Umformbarkeit erzielt werden, wenn die Aufheizrate beim rekristallisierenden Induktionsglühen zwischen 200 K/s und 1200 K/s liegt und wenn das rekristallisierend geglühte Stahlband anschließend mit einer Kühlrate von mehr als 1000 K/s abgekühlt wird. Die besten Ergebnisse bezüglich der Materialeigenschaften werden bei Verwendung einer Wasserkühlung mit Kühlraten von mehr als 1000 K/s erzielt.

Das erfindungsgemäß hergestellte Stahlblech zur Verwendung als Verpackungsstahl eignet sich hervorragend zur Verwendung als Verpackungsstahl. So können beispielsweise aus dem Stahlblech Konserven- oder Getränkedosen gefertigt werden. Da insbesondere im Lebensmittelbereich erhöhte Anforderungen an die Korrosionsbeständigkeit von Verpackungen gestellt werden, ist es zweckmäßig, dass das erfindungsgemäß hergestellte Stahlblech zur Verwendung als Verpackungsstahl nach der Wärmebehandlung und ggf. nach einem abschließenden Dressieren oder einem Kaltwalzschritt mit einer metallischen und korrosionsbeständigen Beschichtung zu versehen, beispielsweise durch elektrolytische Verzinnung oder Verchromung. Es können jedoch auch andere Beschichtungsmaterialien, wie z.B. Aluminium, Zink oder Zink/Nickel und andere Beschichtungsverfahren, wie z.B. Feuerverzinken, zur Anwendung kommen. Die Beschichtung kann dabei je nach den Erfordernissen einseitig oder beidseitig erfolgen.

Gegenüber den aus dem Automobilbau bekannten Dualphasenstählen zeichnet sich das erfindungsgemäß hergestellte Stahlblech zur Verwendung als Verpackungsstahl insbesondere durch die wesentlich niedrigeren Herstellkosten und durch den Vorteil aus, dass ein Stahl mit geringer Legierungskonzentration und wenigen Legierungsbestandteilen verwendet werden kann, wodurch Verunreinigungen der verpackten Lebensmittel vermieden werden können. Hinsichtlich der Festigkeit und der Umformbarkeit ist das erfindungsgemäß hergestellte Stahlblech zur Verwendung als Verpackungsstahl vergleichbar mit den aus dem Automobilbau bekannten Dualphasenstählen.

## Patentansprüche

1. Verfahren zur Herstellung eines Verpackungsstahls aus einem kaltgewalzten Stahlblech aus einem un- oder niedriglegierten Stahl mit einem Kohlenstoffgehalt von weniger als 0,1 Gew.-% und mit folgenden Obergrenzen für den Gewichtsanteil der Legierungsbestandteile:
- N: max. 0,02 %,
- Mn: max. 0,4 %,
- Si: max. 0,04 %,
- Al: max. 0,1 %,
- Cr: max. 0,1 %,
- P: max. 0,03 %,
- Cu: max. 0,1 %,
- Ni: max. 0,1 %,
- Sn: max. 0,04 %,
- Mo: max. 0,04 %,
- V: max. 0,04 %,
- Ti: max. 0,05 %,
- Nb: max. 0,05 %,
- B: max. 0,005 %,
- andere Legierungsbestandteile, einschl. Verunreinigungen: max. 0,05 %,
- Rest Eisen,
**dadurch gekennzeichnet, dass** das Stahlblech zunächst mittels elektromagnetischer Induktion rekristallisierend bei einer Aufheizrate zwischen 200 K/s und 1200 K/s auf Temperaturen oberhalb der Acl-Temperatur des Stahls geglüht und nach dem rekristallisierenden Induktionsglühen mit einer Wasserkühlung bei einer Kühlrate von mehr als 1000 K/s abgekühlt wird, wodurch sich ein mehrphasiges Gefüge ausbildet, welches Ferrit und mindestens einen der Gefügebestandteile Martensit, Bainit und/oder Restaustenit umfasst.

2. Verfahren nach Anspruch 1, **dadurch gekennzeichnet, dass** der niedriglegierte Stahl weniger als 0,02 Gew. % Ti und weniger als 0,02 Gew. % Nb enthält.

3. Verfahren nach einem der voranstehenden Ansprüche, **dadurch gekennzeichnet, dass** das mehrphasige Gefüge zu mehr als 80% und bevorzugt zu wenigstens 95% aus den Gefügebestandteilen Ferrit, Martensit, Bainit und/oder Restaustenit besteht.

4. Verfahren nach einem der voranstehenden Ansprüche, **dadurch gekennzeichnet, dass** das Stahlblech aus einem niedriglegierten Stahl gefertigt ist, welcher Bor und/oder Niob und/oder Titan enthält.

5. Verfahren nach einem der voranstehenden Ansprüche, **dadurch gekennzeichnet, dass** es sich bei dem Stahlblech um kaltgewalztes Fein- oder Feinstblech handelt.

6. Verfahren nach einem der voranstehenden Ansprüche, **dadurch gekennzeichnet, dass** das Stahlblech nach dem rekristallisierenden Glühen und dem Abkühlen mit einer Oberflächenbeschichtung aus Zinn, Chrom, Aluminium, Zink oder Zink/Nickel beschichtet wird.

7. Verfahren nach einem der voranstehenden Ansprüche, **dadurch gekennzeichnet, dass** das Stahlblech nach dem rekristallisierenden Glühen und dem Abkühlen eine Zugfestigkeit von mindestens 500 MPa, bevorzugt von mehr als 650 MPa, und eine Bruchdehnung von mehr als 5%, bevorzugt von mehr als 10% aufweist.

8. Verfahren nach einem der voranstehenden Ansprüche, **dadurch gekennzeichnet, dass** das rekristallisierende Glühen in einem Zeitintervall von 0,5 bis 1,5 Sekunden, bevorzugt von ca. 1 Sekunde erfolgt, wobei das Stahlblech dabei auf Temperaturen oberhalb von 720°C induktiv erhitzt wird.

## Claims

1. Method for the production of a packaging steel from a cold-rolled steel sheet of an unalloyed or low-alloyed steel with a carbon content of less than 0.1 wt.% and the following upper limits for the weight fraction of the alloy components:
- N: max. 0.02%,
- Mn: max. 0.4%,
- Si: max. 0.04%,
- Al: max. 0.1%,
- Cr: max. 0.1%,
- P: max. 0.03%,
- Cu: max. 0.1%,
- Ni: max. 0.1%,
- Sn: max. 0.04%,
- Mo: max. 0.04%,
- V: max. 0.04%,
- Ti: max. 0.05%,
- Nb: max. 0.05%,
- B: max. 0.005%,
- other alloy components, including impurities: max. 0.05%,
- remainder iron,
**characterized in that** the steel sheet is first annealed in a recrystallizing manner by
electromagnetic induction at a heating rate between 200 K/s and 1200 K/s to temperatures above the Ac1 - temperature of the steel and after the recristallizing induction annealing cooled with a water cooling at a cooling rate of more than 1000 K/s, whereby a multiphase structure is formed, which comprises ferrite and at least one of the structure components martensite, bainite and/or residual austenite.

2. Method according to claim 1, **characterized in that** the low-alloyed steel contains less than 0.02 wt% Ti and less than 0.02 wt.% Nb.

3. Method according to one of the preceding claims, **characterized in that** the multiphase structure consists of more than 80% and preferably at least 95% of the structural components ferrite, martensite, bainite and/or residual austenite.

4. Method according to one of the preceding claims, **characterized in that** the steel sheet is made from a low-alloyed steel that contains boron and/or niobium and/or titanium.

5. Method according to one of the preceding claims, **characterized in that** the steel sheet is a cold-rolled thin sheet metal or extra thin sheet metal.

6. Method according to one of the preceding claims, **characterized in that** the steel sheet is coated with a surface coating of tin, chromium, aluminum, zinc or zinc/nickel after the recrystallizing annealing and cooling.

7. Method according to one of the preceding claims, **characterized in that**, after the recrystallizing annealing and the cooling, the steel sheet has a tensile strength of at least 500 MPa, preferably more than 650 MPa, and an elongation at fracture of more than 5%, preferably more than 10%.

8. Method according to one of the preceding claims, **characterized in that** the recrystallizing annealing takes place in a time interval of 0.5 to 1.5 s, preferably, ca. 1 s, wherein the steel sheet is thereby heated inductively to temperatures above 720°C.

## Revendications

1. Procédé de fabrication d'un acier d'emballage à partir d'une tôle d'acier laminée à froid d'un acier non allié ou à alliage faible présentant une teneur en carbone inférieure à 0,1 % en poids et des seuils supérieurs suivants pour la proportion en poids des composants d'alliage :
- N : au maximum 0,02 %,
- Mn : au maximum 0,4 %,
- Si : au maximum 0,04 %,
- Al : au maximum 0,1 %,
- Cr : au maximum 0,1 %,
- P : au maximum 0,03 %,
- Cu : au maximum 0,1 %,
- Ni : au maximum 0,1 %,
- Sn : au maximum 0,04 %,
- Mo : au maximum 0,04 %,
- V : au maximum 0,04 %,
- Ti : au maximum 0,05 %,
- Nb : au maximum 0,05 %,
- B : au maximum 0,005 %,
- d'autres composants d'alliage comprenant des impuretés : au maximum 0,05 %
- fer résiduel,
**caractérisé en ce que** la tôle d'acier est recuite tout d'abord au moyen d'une induction électromagnétique de façon recristallisante à une vitesse de chauffage entre 200 K/s et 1200 K/s à des températures supérieures à la température Ac1 de l'acier et est refroidie après le recuit par induction recristallisante avec un refroidissement à l'eau à une vitesse de refroidissement supérieure à 1000 K/s, ce qui permet de former une structure multiphasique qui comprend du ferrite et au moins l'un des composants de structure martensite, bainite et/ou austénite résiduelle.

2. Procédé selon la revendication 1, **caractérisé en ce que** l'acier à faible alliage contient moins de 0,02 % en poids de Ti et moins de 0,02 % en poids de Nb.

3. Procédé selon l'une des revendications précédentes, **caractérisé en ce que** la structure multiphasique consiste en plus de 80 % et de préférence en moins de 95 % des parties de composants de structure ferrite, martensite, bainite et/ou austénite résiduelle.

4. Procédé selon l'une des revendications précédentes, **caractérisé en ce que** la tôle d'acier est réalisée en un acier à faible alliage, qui contient du bore et/ou du niobium et/ou du titane.

5. Procédé selon l'une des revendications précédentes, **caractérisé en ce que** la tôle d'acier est une tôle mince ou un fer noir laminé à froid.

6. Procédé selon l'une des revendications précédentes, **caractérisé en ce que** la tôle d'acier est revêtue après le recuit recristallisant et le refroidissement avec un revêtement de surface en étain, chrome, aluminium, zinc ou zinc/nickel.

7. Procédé selon l'une des revendications précédentes, **caractérisé en ce que** la tôle d'acier après le recuit recristallisant et le refroidissement présente une résistance à la traction d'au moins 500 MPa, de préférence de plus de 650 MPa et un allongement à la rupture de plus de 5 %, de préférence de plus de 10 %.

8. Procédé selon l'une des revendications précédentes, **caractérisé en ce que** le recuit recristallisant est chauffé dans un intervalle temporel de 0,5 à 1,5 seconde, de préférence à environ 1 seconde, dans lequel la tôle d'acier est chauffée par induction à des températures supérieures à 720 °C.
